# EUROPÄISCHE PATENTANMELDUNG

(11) **EP 1 089 246 A2**
(43) Veröffentlichungstag der Anmeldung: **04.04.2001**
(21) Anmeldenummer: 00118613.9
(22) Anmeldetag: 28.08.2000
(51) Int. Cl.: G09B 19/04

(54) **Verfahren und Vorrichtung zur Therapiekontrolle und- optimierung bei Sprachstörungen**

(30) Priorität: 01.10.1999 DE 19947359
(71) Anmelder: SIEMENS AKTIENGESELLSCHAFT, 80333 München (DE)
(72) Erfinder: Abraham-Fuchs, Klaus, Dipl.-Phys., 91058 Erlangen (DE)

(57) **Zusammenfassung**

Verfahren und Vorrichtung zur Therapiekontrolle und -optimierung bei Sprachstörungen, wobei die Sprache des Patienten aufgezeichnet und über ein Sprachbeurteilungssystem, das Spracherkennungsalgorithmen und eine phonetische Datenbank enthält, ein quantifizierbares Ähnlichkeitsmaß der Artikulationsfähigkeit des Patienten ermittelt wird, das gespeichert und/oder als Biofeedback an den Patienten ausgegeben wird.

## Beschreibung

Die Erfindung bezieht sich auf ein Verfahren und Vorrichtung zur Therapiekontrolle und -optimierung bei Sprachstörungen sowie eine Vorrichtung zur Durchführung dieses Verfahrens.

Patienten nach einem Schlaganfall oder einem Gehirntrauma leiden häufig unter Sprachstörungen. In Rehabilitationsprogrammen wird versucht in Trainingssitzungen mit Logopäden, zunehmend auch unter Einsatz von Computer-Trainingssoftware, die Fähigkeit zu sprechen wiederherzustellen. Vorrangiges Ziel ist hierbei, dass der Patient im Alltag so kommunizieren kann, dass er von seinen Mitmenschen verstanden wird. Neben Defiziten in der Wortfindung und der grammatikalischen Satzbildung ist häufig auch die Sprachmotorik betroffen, so dass der Patient die Worte zwar artikuliert, aber von anderen nicht oder nur schlecht verstanden wird. Der Patient selbst kann jedoch, ohne direktes Feedback eines Therapeuten oder einer betreuenden Person, oft gar nicht beurteilen wie verständlich oder unverständlich seine Artikulation ist. Da die Sitzungen mit Logopäden nur einige Stunden in der Woche ausmachen ist der mögliche Trainingsaufwand sehr stark begrenzt und in der übrigen Zeit ist der Patienten alleine nicht in der Lage sinnvolle Übungen durchzuführen, da ja die Kontrolle fehlt.

Der Erfindung liegt daher die Aufgabe zugrunde, ein Verfahren und eine zu dessen Durchführung geeignete Vorrichtung zu schaffen, die es einem Patienten ermöglicht selbständig mit Hilfe einer technischen Vorrichtung ein kontrolliertes Sprachtraining durchzuführen, das auch ohne Vorgaben, wie vom Lehrer vorgesprochenen Sätzen od. dgl., funktioniert.

Zur Lösung dieser Aufgabe ist erfindungsgemäß vorgesehen, dass die Sprache des Patienten aufgezeichnet und über ein Sprachbeurteilungssystem, das Spracherkennungsalgorithmen und eine phonetische Datenbank enthält, ein quantifizierbares Ähnlichkeitsmaß der Artikulationsfähigkeit des Patienten ermittelt wird, das gespeichert und/oder als Biofeedback an den Patienten ausgegeben wird.

Sprachschulungssysteme, in denen ein Schüler eine fremde Sprache besser und ohne ständige Anwesenheit eines Lehrers erlernen sind zwar bereits in den unterschiedlichsten Ausführungsformen bekannt geworden. Wir verweisen hierzu beispielsweise auf die US-Patentschriften 5 340 316, 5 536 171, 5 540 589 und 5 717 828 sowie die EP 0 360 909 A1 und die GB 2 272 097 A. Dabei geht es aber immer nur darum, dass ausgehend von bestimmten Eingaben des Schülers das System die Richtigkeit anhand der gespeicherten Programme erkennt, um dann gegebenenfalls falsche Aussprachen zu korrigieren oder bei Fehlübersetzungen die gespeicherte Lösungsübersetzung der Schülerlösung gegenüber zu stellen. Auch wenn nicht über eine Eingabetastatur gearbeitet wird, sondern der Schüler seine Eingaben spricht und das System ebenfalls mit Sprache antwortet, stellt sich hierbei nicht das Problem, dass der Schüler die von ihm gesprochenen Worte in ihrer Artikulation nicht beurteilen kann. Er kann zwar einmal ein Wort falsch aussprechen, kann aber das sofort korrigieren, wenn ihm vom System die richtige Aussprache gegeben wird. Genau an diesem Punkt ergeben sich die Schwierigkeiten, wenn es darum geht, eine Therapiekontrolle und -optimierung bei Sprachstörungen, beispielsweise gehirnverletzter Patienten, anbieten zu wollen. Immer aber geht es um ein Nachsprechen von Vorgaben des Lehrers oder des Übungsprogramms.

Die Bestimmung des Ähnlichkeitsmaßes der Artikulationsfähigkeit kann dabei in unterschiedlicher Weise erfolgen, beispielsweise dadurch, dass es als Korrelationsfaktor der akustischen Spektren der Datenbank-Artikulation und der aktuellen Patientenartikulation errechnet wird. In jedem Fall muss das Ähnlichkeitsmaß so gewählt sein, dass es gleichzeitig ein Maß für die Verständlichkeit des gesprochenen Wortes durch einen unvoreingenommenen Dritten ist.

Neben der Speicherung der errechneten Ähnlichkeitswerte - die insbesondere für eine regelmäßige Kontrolle des Trainingserfolgs durch einen Arzt oder Logopäden von Bedeutung ist - ist dabei das angesprochene Biofeedback an den Patienten, beispielsweise in Form einer Zahl, eines optischen oder akustischen Signals verschiedener Intensitäten, einer irgendwie gearteten Textanzeige auf einem Monitor, in der gegebenenfalls auch Anweisungen zur Veränderung der Artikulation beim Patienten gemacht werden können od. dgl., von ganz erheblicher Bedeutung. Dieses ständige Biofeedback ermöglicht dem Patienten ja erst ein einigermaßen sinnvolles Training ohne Logopäden.

Das erfindungsgemäße Verfahren kann dabei in Ausgestaltung der Erfindung in der Weise als Trainingsverfahren ausgebildet sein, dass eine programmierbare Datenbank vorgesehen ist, die den Patienten ausgewählte Wörter oder Sätze nachsprechen lässt. In einem solchen Fall - das jeweils vom Patienten artikulierte Wort steht ja dann fest - bedarf es einer Spracherkennung, beispielsweise über Spracherkennungsalorithmen, nicht. In allen anderen Fällen muss aber erst über ein Spracherkennungssystem versucht werden, aus dem aufgezeichneten Sprachsignal die gesprochenen Worte zu erkennen, d. h. einem Wort in der gespeicherten Datenbank zuzuordnen.

Bei der Bestimmung eines Ähnlichkeitsmaßes ist das erfindungsgemäße Verfahren auch nicht darauf beschränkt lediglich das Ähnlichkeitsmaß eines von einem Patienten gesprochenen Wortes mit einem vorgegebenen Wort (mit oder ohne vorherige Erkennung des gesprochenen Wortes) zu ermitteln, sondern dabei kann auch die Artikulation von Wortzusammenhängen und Sprachrhythmen, wie etwa fehlende oder überlange Zwischenwortpausen, mit beurteilt werden.

In diesem Zusammenhang ist es zweckmäßig, eine Datenbank einzusetzen, die Trainingseinheiten vorgeben kann, die durch Expertenwissen eines Logopäden oder Neurologen so vorstrukturiert sind, dass sie auf bekannte Schwerpunkte von Defiziten, z. B. die Unfähigkeit bestimmte Laute, wie "r" oder "s", oder bestimmte Kombinationen von Lauten auszusprechen, besonders eingeht, indem gezielt Übungen, die solche Laute enthalten ausgewählt werden.

Derart vorstrukturierte Datenbank-Trainingsprogramme können auch zu Diagnosezwecken verwendet werden. Der Patient muss eine Auswahl von Sätzen und Worten nachsprechen bzw. vorlesen. Nach Berechnung der Ähnlichkeitsmaße mit den entsprechenden Worten oder Sätzen einer phonetischen Datenbank kann das Diagnosesystem durch Auswertung von Statistiken über längere Texte bestimmen, wo die Schwerpunkte der Defizite liegen und anschließend eventuell sogar mit Hilfe von Expertensystemen auf zugrunde liegende Läsionen abbilden (z. B. das Areal der geschädigten Hirnrinde bestimmen oder auf eine Läsion im Hirnstamm verweisen usw.).

Schließlich eignet sich das erfindungsgemäße Verfahren auch zur Kontrolle und Steuerung der Patientenbehandlung, insbesondere der Medikation. Bekannt ist, dass eine Langzeitmedikation mit Medikamenten, wie z. B. Antidepressiva oder Antiepileptika, neurologische Defizite, unter anderem auch im sprachlichen Bereich auslösen kann. Das beschriebene Verfahren kann sowohl eingesetzt werden, um das Auftreten solcher Defizite zu monitoren, als auch direkt um die Dosierung der Medikamente individuell zu optimieren zwischen erwünschter therapeutischer Wirkung und Minimierung unerwünschter Nebeneffekte.

Zur Durchführung des Verfahrens ist in Ausgestaltung der Erfindung eine Vorrichtung vorgesehen, die gekennzeichnet ist durch eine Sprachaufnahmeeinrichtung mit nachgeschaltetem Speicher und eine phonetische Datenbank, die gemeinsam an ein eine Vergleichs- und eine Auswertestufe enthaltendes Sprachbeurteilungssystem angeschlossen sind, dem ein Ausgabespeicher und/oder eine Biofeedbackstufe sowie ein Patientenmonitor nachgeschaltet sind, wobei der Sprachaufnahmeeinrichtung und der Vergleichsstufe kann in weiterer Ausgestaltung der Erfindung eine mit Spracherkennungsalgorithmen arbeitende Spracherkennungseinrichtung zwischengeschaltet sein, um unbekannte, also nicht vom System vorgegebene Worte, die unmittelbar vom Patienten formuliert worden sind, zunächst durch Vergleich mit Worten einer Datenbank zu erkennen, so dass dann anschließend das so erkannte Wort mit der Ideal-Artikulation aus der phonetischen Datenbank in Korrelation gebracht und das gewünschte Ähnlichkeitsmaß errechnet werden kann.

Neben einer mit dem Patientenmonitor, der optische und akustische Wiedergabeeinrichtungen enthalten kann, verbundenen programmierbaren Datenbank zur Ausgabe von Sprachbeispielen, die der Patient nachsprechen soll, kann gemäß einem weiteren Ausführungsbeispiel der Erfindung auch vorgesehen sein, dass dem Ausgabespeicher eine Langzeitvergleichs- und Beurteilungsstufe der gespeicherten Ähnlichkeitsmaße nachgeschaltet ist, um hieraus entweder zugrunde liegende Läsionen abzubilden oder aber die Medikation zu kontrollieren und zu optimieren.

Schließlich liegt es auch noch im Rahmen der Erfindung, die erfindungsgemäße Vorrichtung als tragbares Trainingsgerät auszubilden, das nicht nur im Logopädiezentrum an einem stationären Arbeitsgerät ein Arbeiten ermöglicht, sondern ein umfangreiches Training des Patienten zu Hause gestattet, oder am Körper getragen werden kann und somit unterwegs genutzt werden kann.

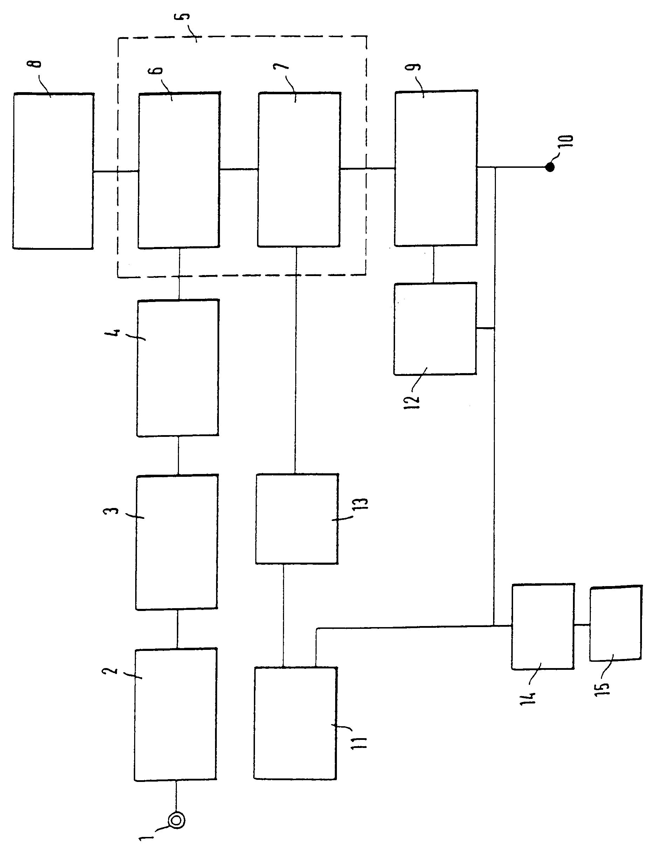

Weitere Vorteile, Merkmale und Einzelheiten der Erfindung ergeben sich aus der nachfolgenden Beschreibung eines Ausführungsbeispiels sowie anhand der Zeichnung, die ein Blockschaltbild einer erfindungsgemäßen Therapiekontroll- und -optimierungsvorrichtung zeigt.

Die Vorrichtung enthält eine Sprachaufnahmeeinrichtung 1, beispielsweise ein Mikrofon, der ein zumindest flüchtiger Datenspeicher 2 nachgeschaltet ist. Bei 3 ist eine Signalvorverarbeitungsstufe angedeutet, die die Signale aus dem Datenspeicher in geeigneter Weise vorbereiten, beispielsweise auch digitalisieren kann, wenn eine digitalisierte Sprachbeurteilung erfolgen soll, wobei aber eine solche Signalvorverarbeitungsstufe 3 nicht in allen Fällen erforderlich ist. Über eine ebenfalls nur optional benötigte Spracherkennungsstufe 4 wird das aufgezeichnete Signal der Patientensprache, einem Sprachbeurteilungssystem 5 zugeführt, das eine Vergleichsstufe 6 und eine Auswertestufe 7 zur Berechnung eines Ähnlichkeitsmaßes enthält. An die Vergleichsstufe ist neben dem Sprachsignal des Patienten eine phonetische Datenbank 8 angeschlossen, in der das entweder vorgegebene oder in der Spracherkennungsstufe 4 erkannte Wort abgerufen wird. Das Sprachbeurteilungssystem mit der Vergleichsstufe 6 und der Auswertestufe 7 berechnet ein Ähnlichkeitsmaß zu dem idealartikulierten Wort der phonetischen Datenbank 8, z. B. einen Korrelationsfaktor der akustischen Spektren der Datenbankartikulation und der aktuellen Patientenartikulation. Unabhängig davon, wie das Ähnlichkeitsmaß quantifizierbar bestimmt werden soll, muss es jedenfalls so gewählt sein, dass es gleichzeitig ein Maß für die Verständlichkeit des gesprochenen Wortes durch einen unvoreingenommen Dritten ist. Es geht ja nicht etwa um die Beurteilung des Ähnlichkeitsgrades von Spektren, sondern letztendlich immer darum, über das Ähnlichkeitsmaß eine echte und für den Patienten verwertbare Aussage über das Maß der Verständlichkeit seiner Artikulation gegenüber dritten Personen zu erhalten, um darauf aufbauend in Trainingsprogrammen die Artikulationsfähigkeit des Patienten gezielt zu verbessern und dies alles, ohne dass ständig ein Logopäde hierfür erforderlich ist.

Die berechneten Ähnlichkeitsmaße werden einem Datenspeicher 9 zugeführt, aus dem sie entweder über eine Schnittstelle 10 vom Arzt oder Therapeuten abgerufen werden können, oder aber von dem aus auch jederzeit eine Abfrage und Anzeige auf einem Monitor 11 erfolgen kann , der mit einer optischen und akustischen Wiedergabeeinrichtung versehen ist. Gegebenenfalls können die Daten im Speicher 9 einer Langzeitbeurteilungsstufe 12 zugeführt werden, die die Veränderungen der Ähnlichkeitsmaße und die daraus möglichen Rückschlüsse auf die Art der Läsionen und etwaige Unzulänglichkeiten bei der Medikation des Patienten errechnen kann.

Ein ganz wesentlicher Teil einer erfindungsgemäßen Vorrichtung ist die Biofeedbackstufe 13, die die in der Auswertestufe 7 errechneten Ähnlichkeitswerte in Form eines Biofeedbacks, also einer Zahl eines optischen oder akustischen Signals eines gesprochenen oder geschriebenen Textes od. dgl. über den Monitor 11 an den Patienten ausgibt, so dass dieser eine tatsächliche Korrektur und Erfolgskontrolle erhält. Bei 14 ist eine programmierbare Datenbank mit einer Eingabevorrichtung 15 dargestellt, über die der Arzt oder Logopäde besondere Programme eingeben oder vorstrukturieren kann, um gezielte Trainingsblöcke zu erstellen, die abgestimmt auf die besondere Behinderung des jeweiligen Patienten gezielt dessen Defizite fördern können.

## Patentansprüche

1. Verfahren und Vorrichtung zur Therapiekontrolle und -optimierung bei Sprachstörungen, **dadurch gekennzeichnet,** dass die Sprache des Patienten aufgezeichnet und über ein Sprachbeurteilungssystem, das Spracherkennungsalgorithmen und eine phonetische Datenbank enthält, ein quantifizierbares Ähnlichkeitsmaß der Artikulationsfähigkeit des Patienten ermittelt wird, das gespeichert und/oder als Biofeedback an den Patienten ausgegeben wird.

2. Verfahren nach Anspruch 1, **dadurch gekennzeichnet,** dass von Sprachbeurteilungssystem das Ähnlichkeitsmaß als Korrelationsfaktor der akustischen Spektren der Datenbank-Artikulation und der aktuellen Patientenartikulation errechnet wird.

3. Vorrichtung zur Durchführung des Verfahrens nach Anspruch 1 oder 2, **gekennzeichnet durch** eine Sprachaufnahmeeinrichtung (1) mit nachgeschaltetem Speicher (2) und eine phonetische Datenbank (8), die gemeinsam an ein eine Vergleichsstufe (6) und eine Auswertestufe (7) enthaltendes Sprachbeurteilungssystem (5) angeschlossen sind, dem ein Ausgabespeicher und/oder ein Biofeedbackstufe (13) sowie ein Patientenmonitor (11) nachgeschaltet sind, wobei der Sprachaufnahmeeinrichtung (1) und der Vergleichsstufe (6) eine mit Spracherkennungsalgorithmen arbeitende Spracherkennungsstufe (4) zwischengeschaltet ist.

4. Vorrichtung nach Anspruch 3, **dadurch gekennzeichnet,** dass dem Ausgabespeicher (9) eine Langzeitbeurteilungsstufe (12) der gespeicherten Ähnlichkeitsmaße nachgeschaltet ist.

5. Vorrichtung nach Anspruch 3 oder 4, **dadurch gekennzeichnet,** dass sie als tragbares Trainingsgerät ausgebildet ist.
